(19) Europäisches Patentamt
European Patent Office
Office européen des brevets

(11) Numéro de publication: **0 024 754**
**B1**

## (12) FASCICULE DE BREVET EUROPEEN

(45) Date de publication du fascicule du brevet: **06.04.83**

(21) Numéro de dépôt: **80200724.5**

(22) Date de dépôt: **28.07.80**

(51) Int. Cl.³: **C 08 L 27/06,** C 08 K 5/13, C 08 K 5/34, C 08 K 5/37

## (54) Compositions stabilisées à la chaleur à base de polymères du chlorure de vinyle.

(30) Priorité: **10.08.79 FR 7920640**
**05.09.79 FR 7922365**

(43) Date de publication de la demande:
**11.03.81 Bulletin 81/10**

(45) Mention de la délivrance du brevet:
**06.04.83 Bulletin 83/14**

(84) Etats contractants désignés:
**AT BE CH DE FR GB IT LI LU NL SE**

(56) Documents cités:
**néant**

(73) Titulaire: **SOLVAY & Cie (Société Anonyme)**
**Rue du Prince Albert, 33**
**B-1050 Bruxelles (BE)**

(72) Inventeur: **Guyaux, Jean**
**Rue Vanderhoeft 7**
**B-1030 Bruxelles (BE)**

(74) Mandataire: **Eischen, Roland**
**Solvay & Cie Département de la Propriété Industrielle Rue de Ransbeek 310**
**B-1120 Bruxelles (BE)**

**EP 0 024 754 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Compositions stabilisées à la chaleur à base de polymères du chlorure de vinyle

La présente invention concerne des compositions stabilisées à la chaleur à base de polymères du chlorure de vinyle, et plus particulièrement, de telles compositions comprenant un stabilisant thermique primaire usuel et une 2,6-dialkyl, 3,5-dicarbalkoxy, 1,4-dihydropyridine.

La stabilité thermique d'une composition polymérique s'évalue généralement à court terme et à long terme. La stabilité thermique à court terme, ou stabilité thermique initiale, est l'aptitude de la composition à résister à la dégradation provoquée par l'élévation de température à laquelle il faut la soumettre pour y incorporer les additifs usuels et la mettre en oeuvre. La stabilité thermique à long terme est l'aptitude de la composition à résister à la dégradation dans les conditions d'utilisation des objets façonnés à partir de la composition; elle est mesurée par le temps qui s'écoule avant qu'un échantillon noircisse dans des conditions données.

Une mauvaise stabilité thermique initiale se marque par une altération de la coloration des objets façonnés qui est d'autant plus important que la stabilité est faible.

Pour de nombreuses applications des compositions à base d e polymères du chlorure de vinyle, telles que par exeple la fabrication de corps creux et de feuilles calandrées destinés à l'emballage, il est impérieux de disposer de compositions qui présentent, non seulement une excellente stabiité thermique à long terme, mais également une bonne stablité thermique initiale.

Dans le brevet français 2 239 49[illegible] déposé le 3 mars 1973 au nom de la Société Chimique des Charbonnages de France, on décrit l'utilisation de composés du type des 2,6-dialkyl, 3,5-dicarbalkoxy, 1,4-dihydropyridines comme stabilisants thermiques auxiliaires des polymères du chlorure de vinyle.

Les dérivés précités de la 1,4-dihydropyridine constituent de bons stabilisants thermiques secondaires des polymères du chlorure de vinyle. Ils améliorent en effet sensiblement la stabilité thermique initiale des compositions à base de polymères du chlorure de vinyle contenant des stabilisants thermiques primaires usuels sans affecter défavorablement la stabilité thermique à long terme. Ces compositions conviennent donc bien a priori pour la fabrication de récipients destinés à l'emballage.

On a cependant constaté que la stabilitié thermique intiale de telles compositions évolue de manière défavorable et très rapide (en quelques minutes), ce qui a pour inconvénient de limiter les possibilités de recyclage qui impliquent nécessairement des durées totales de mise en oeuvre relativement longues.

On a également constaté que l'emballage de produits alimentaires au moyen de récipients fabriqués au départ de telles compositions a pour effet d'altérer, surtout dans le cas de produits sensibles tels que les eaux de boisson, le gout des produits emballés.

La présente invention, telle qu'elle est caractérisée dans les revendications, a pour but de procurer des compositions stabilisées à la chaleur à base de polymères du chlorure de vinyle telles que décrites ci-dessus qui ne présentent pas les inconvénients précités des compositions connues.

Un aspect surprenant de la présente invention réside dans le fait que les antixoydants phénoliques et les antioxydants sulfurés détériorent la stabilité thermique des polymères du chlorure de vinyle lorsqu'ils sont utilisés en l'absence de dérivés de la dihydropyridine alors que l'emploi conjoint de dérivés de la dihydropyridine et d'antioxydants phénoliques ou sulfurés conduit à une amélioration sensible de la coloration des objets façonnés (stabilité thermique initiale) et de la stabilité du coloris au course du temps.

Un autre aspect surprenant de l'invention réside dans le fait que d'autres antioxydants, également connus en eux-mêmes, tels que par exemple les phosphites organiques, ne permettent pas de résoudre les problèmes organoleptiques liés à l'utilisation de 2,6-dialkyl, 3,5-dicarbalkoxy, 1,4-dihydropyridines.

La nature de l'antioxydant phénolique utilisé dans les compositions selon l'invention n'est pas critique. L'antioxydant phénolique peut être choisi parmi les antioxydants phénoliques usuels des polymères thermoplastiques tels que les monophénols monocycliques, les polyphénols monocycliques, les bisphénols et les trisphénols. De préférence, on utilise des composés phénoliques comprenant des substituants alkyles et plus particulièrement encore des substituants alkyles à encombrement stérique élevé tels que des substituants isopropyle ou tertiobutyle. Une liste non limitative de tels antioxydants phénoliques utilisables est reprise dans l'ouvrage de Joachim Voigt, Die Stabilisierung der Kunststoffe gegen Licht un Wärme, Springer-Verlag, 1966, p.595 à 609.

A titre d'exemples des antioxydants phénoliques préférés, on peut citer les monophénols monocycliques alkylsubstitués tels que le 2,6-di-terbutyl-4-méthylphénol, le 2,4-diméthyl-6-tert. butylphénol, le 2,4,6-tri-tert.butylphénol, et le 3-(3',5'-di-tert.butyl-4-hydroxyphényl)propionate de n-octadécyle, les polyphénols monocycliques alkyl-substitués tels que la tert.butyl-hydroquinone, la 2,5-di-tert.butylhydroquinone et la 2,5-di-tert. amylhydroquinone, les bisphénols tels que le 2,2'-méthylènebis(4-méthyl-6-tert.butylphénol), le 4,4'-méthylènebis-(2,6-di-tert.butylphénol) et le 4,4'-butylidènebis-(3-méthyl-6-tert. butylphénol) et les trisphénols tels que le 1,3,5-triméthyl-2,4,6 tris-(3',5'-di-tert.butyl-4'-hydroxybenzyl)-benzène et le 1,1,3-tris-(2'-méthyl-4'-hydroxy-5'-t.butylphényle)-butane.

Parmi eux, on donne la préférence aux monophénols monocycliques et aux bis-et trisphénols substitués par des groupements alkyles à encombrement stérique important et, de préférence, par des groupements tertiobutyle, et plus particulièrement encore aux monophénols monocycliques et aux trisphénols substitués par des groupements isobutyles.

Des monophénols monocycliques particulièrement préférés sont le 2,6-di-tert,butyl-4-méthylphénol et le 3-(3′,5′-di-tert. butyl-4-hydroxyphényl)propionate de n-octadécyle.

La nature de l'antioxydant sulfuré utilisé dans les compositions selon l'invention n'est pas critique non plus. L'antioxydant sulfuré peut être choisi parmi les antioxydants sulfurés usuels des polymères thermoplastiques tels que les thiols, les thioéthers, les mercaptides métalliques bien connus comme antioxydants secondaires. Une liste non limitative des antioxydants utilisables est reprise dans l'ouvrage de Joachim Voigt, Die Stabilisierung der Kunststoffe gegen Licht un Wärme, Springer-Verlag, 1966 p.595 à 609.

Les antioxydants sulfurés utilisés de préférence dans les compositions selon l'invention sont les thioesters et plus particulièrement les thioesters dérivés d'acides organiques carboxyliques comprenant de 6 à 30 atomes de carbone dans leur molécule. De très bons résultats ont été obtenus avec les thiodipropionates dérivés d'acides organiques carboxyliques comrpenant de 10 à 20 atomes de carbone dans leur molécule tels que les thiodipropionates de dicétyle.

Les antioxydants des compositions selon l'invention qui ont la préférence sont les antioxydants phénoliques.

La quantité d'antioxydant phénolique ou sulfuré présente dans les compositions conformes à l'invention n'est pas critique. Habituellement, on utilise de 0,05 à 0,5 partie au total d'antioxydant pour 100 parties en poids de polymère du chlorure de vinyle. De préférence, on en utilise de 0,1 à 0,2 partie.

Les 2,6-dialkyl, 3,5-dicarbalkoxy, 1,4-dihydropyridines utilisées dans les compositions conformes à l'invention répondent à la formule générale

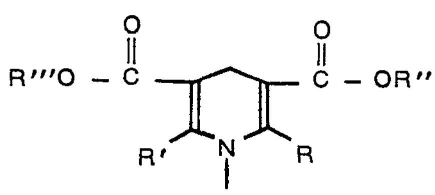

dans laquelle R, R′, R″ et R‴ représentant des groupements alkyles identiques ou différents, contenant de 1 à 18 atomes de carbone.

On donne la préférence aux produits dont les substituants R et R′ représentent un radical méthyle et les substituants R″ et R‴ un radical alkyle linéaire en $C_8$ à $C_{18}$. Un dérivé de dihydropyridine tout particulièrement préféré est la 1,6-diméthyl, 3,5-dicarbododécyloxy 1,4-dihydropyridine.

La quantité de dérivé de dihydropyridine présente dans les compositions suivant l'invention n'est pas critique. Habituellement, on utilise de 0,01 à 1 partie de dérivé de 1,4-dihydropyridine pour 100 parties en poids de polymère du chlorure de vinyle. De préférence, on en utilise de 0,05 à 0,5 partie.

Par ailleurs, tous les stabilisants thermiques primaires usuels des polymères du chlorure de vinyle conviennent généralement à la réalisation de compositions selon l'invention. A titre d'exemples de pareils stabilisants primaires, on peut citer les sels organiques et inorganiques de plomb, les organo-étains, ainsi que les systèmes baryum-cadmium et calcium-zinc. Une liste non limitative de stabilisants thermiques primaires usuels des polymères du chlorure de vinyl utilisables est reprise dans l'ouvrage de H. A. Sarvetnick, Reinhold Plastics Application Series, 1969 (p. 98—99).

Des compositions préférées selon la présente invention contiennent come stabilisant thermique primaire un système calcium-zinc comprenant un composé de calcium associé à un composé de zinc. Ces compositions conviennent tout particulièrement pour la fabrication d'emballages tels que des feuilles calandrées ou des corps creux transparents présentant une excellente coloration initiale.

A titre d'exemples de systèmes calcium-zinc, on peut citer ceux à base de savons de calcium et de zinc. Avantageusement, on utilise des sels de zinc et de calcium d'acides aliphatiques monocarboxyliques ayant de 6 à 30 atomes de carbone tels que par exemple les acides stéarique, palmitique, 2-éthylhexanoïque etc. La proportion relative du calcium au zinc est généralement comprise entre 1 et 5 atomes de calcium pour 1 atome de zinc.

Les doses des stabilisants thermiques primaires sont celles utilisées usuellement. On incorpore donc généralement de 0,1 à 10 parties en poids de stabilisant thermique primaire dans 100 parties de polymère et, de préférence, de 0,2 à 1 partie en poids de stabilisant thermique primaire dans 100 parties de polymère.

Des compositions particulièrement préférées selon la présente invention contiennent donc de 0,1 à 0,2 partie au total d'antioxydants, de 0,01 à 0,5 partie de 2,5-dialkyle, 3,5-dicarbalkoxy, 1,4-dihydropyridine et de 0,2 à 1 partie pour 100 parties de polymère du chlorure de vinyle d'un stabilisant thermique primaire du type des systèmes calcium-zinc.

Il est entendu que les compositions selon l'invention peuvent contenir d'autres ingrédients tels

que par exemple, des agents facilitant la mise en oeuvre, des agents renforçants, des pigments ou des lubrifiants usuels des polymères du chlorure de vinyle.

Par polymères du chlorure de vinyle, on entend désigner tous les polymères contenant au moins 50% molaires, et de préférence au moins 70% molaires, d'unités monomériques dérivées du chlorure de vinyle. Les polymères du chlorure de vinyle qui conviennent à la réalisation des compositions selon l'invention comprennant donc aussi bien les homopolymères du chlorure de vinyle que ses copolymères contenant des unités monomériques dérivées d'un ou de plusieurs comonomères. Ces copolymères peuvent être des copolymères statistiques, des copolymères à blocs ou encore des copolymères greffés sur un tronc quelconque. A titre d'exemples de comonomères du chlorure de vinyle, on peut citer les oléfines telles que l'éthylène, le propylène et le styrène, les esters tels que l'acétate de vinyle et les acrylates et les méthacrylates d'alkyle, les dérivés vinylidéniques tels que le chlorure et le fluorure de vinylidène.

De préférence, les compositions suivant l'invention sont à base d'homopolymères du chlorure de vinyle.

Le mode de fabrication des polymères du chlorure de vinyle mis en oeuvre peut être quelconque. On peut donc utiliser indifféremment pour la fabrication de compositions selon l'invention des polymères du chlorure de vinyle obtenus par polymérisation en masse, en phase gazeuse, en solution ou encore en émulsion ou en suspension aqueuses.

Le mode d'incorporation des stabilisants thermiques dans le polymère du chlorure de vinyle n'est pas critique. Leur incorporation ne pose aucun problème particulier. Habituellement, ils sont mélangés avec le polymère, de manière connue en soi, par exemple au moment de la fabrication du prémélange. Un mode opératoire particulièrement avantageux pour la fabrication de compositions selon l'invention consiste à mélanger sur mélangeur rapide le polymère du chlorure de vinyle avec les ingrédients solides de la composition (comprenant notamment l'antioxydant et le dérivé de dihydropyridine) et à incorporer à ce mélange, lorsque sa température a atteint 60°C environ, les ingrédients liquides de la composition. On continue alors à faire tourner le mélangeur rapide jusqu'à ce que le mélange final ait atteint une température de 100 à 125°C environ avant de la décharger dans un mélangeur lent pour le refroidir jusqu'à 30°C environ.

Les compositions stabilisées à la chaleur conformes à l'invention sont aptes à la mise en oeuvre par tous les procédés classiques de transformation des matières plastiques. Ces compositions conviennent tout particulièrement pour la fabrication de feuilles et de corps creux-flacons, bouteilles et autres récipients — destinés à l'emballage de liquides et de solids.

Dans le case où le stabilisant primaire est un système calcium-zinc, elles conviennent tout particulièrement pour la fabrication de bouteilles transparentes et peu ou pas colorées pour le conditionnement de liquides alimentaires, tels que le vinaigre, l'huile et l'eau, par extrusion-soufflage à l'aide de machines fonctionnant à cadence élevée.

Les exemples qui suivent illustrent l'invention sans toute-fois la limiter. Dans tous les examples, on a utilisé comme polymère du chlorure de vinyle un polychlorure de vinyl de nombre K (mesuré dans le 1,2-dichloroéthane à 25°C) égal à 58 obtenu par polymérisation en suspension aqueuse.

Les compositions ont toutes été fabriquées suivant le mode opératoire décrit plus haut. Elles contiennent toutes un pigment bleu.

Dans les exemples, on a évalué les compositions suivantes, les teneurs étant exprimées en poids:

| | |
|---|---|
| — polychlorure de vinyl | 100 |
| — modifiant acrylique | 10,5 |
| — huile de soya époxydée | 5 |
| — cire de polyéthylène | 0,2 |
| — ester de glycérol | 1,5 |
| — stéarate de calcium | 0,17 |
| — éthylhexanoate de zinc | 0,24 |
| — mélange maître contenant un pigment bleu | 1 |
| — 2,6-diméthyl, 3,5-dicarbolauroxy 1,4-dihydropyridine (DHP) | voir Tableux I et II |
| — antioxydant phénolique | voir Tableau I |
| — antixoydant sulfuré | voir Tableau II |

L'exemple 1 est donné à titre de comparaison et concerne unt composition ne comprenant ni un dérivé de la 1,4-dihydropyridine, ni un antioxydant sulfuré.

L'exemple 2, également de comparaison, concerne une composition comprenant le dérivé précité de 1,4-dihydropyridine, mais pas d'antioxydant phénolique.

Les exemples 3, 4 et 5 concernent des compositions selon l'invention contenant le dérivé précité de 1,4-dihydropyridine et diverses quantités de 3-(3',5'-di-tert. butyl-4-hydroxyphényl)propionate de n-octadécyle.

L'exemple 6 concerne un composition selon l'invention contenant le dérivé précité de 1,4-dihydropyridine et du 2,6-di-tert.-butyl-4-méthylphénol.

L'exemple 7, de comparaison, concerne une composition contenant de 3-(3',5'-di-tert.butyl-4-hydroxyphényl)propionate de n-octadécyle, mais pas de dérivé de 1,4-dihydropyridine.

L'exemple 8, de comparaison, concerne une composition comprenant le dérivé précité de 1,4-dihydropyridine mais pas d'antioxydant sulfuré.

L'exemple 9 concerne une composition selon l'invention contenant le dérivé précité de 1,4-dihydropyridine et du thiodipropionate de dilauryle.

L'exemple 10, de comparaison, concerne une composition contenant du thiodipropionate de dilauryle mais pas de dérivé de la 1,4-dihydropyridine.

La stabilité thermique initiale et son évolution au cours du temps sont évaluées sur des crêpes obtenus par malaxage des compositions à 195°C sur un malaxeur à deux cylindres. On a déterminé l'indice de jaune (IJ) de ces crêpes à divers intervalles au moyen d'un photométre de marque "Elrepho". L'indice de jaune se définit comme suit:

$$IJ = \frac{R-B}{V}$$

R représentant la réflectance en lumière rouge de l'échantillon, exprimée, en %, par rapport à l'oxyde de magnésium,
B représentant la réflectance en lumière bleue de l'échantillon, exprimée en %, par rapport à l'oxyde de magnésium, et
V représentant la réflectance en lumière verte de l'échantillon, exprimée en %, par rapport à l'oxyde de magnésium.

La stabilité thermique à long terme, également évaluée sur malaxeur à 195°C, est déterminée par la mesure du temps qui s'écoule avant que le crêpe noircisse.

La comparaison des résultats des excemples 3 à 6 et 9 avec ceux des exemples de référence 1 et 2 montre que les antioxydants phénoliques et sulfurés améliorent sensiblement, non seulement la stabilité thermique initiale des compositions à base de polymères du chlorure de vinyl comprenant un dérivé de 1,4-dihydropyridine, mais également la stabilité du coloris au cours du temps sans affecter la stabilité thermique à long terme.

Les exemples de référence 7 et 10 montrent que les antixoydants phénoliques et sulfurés n'ont aucun effet stabilisant en eux-mêmes. Bien au contraire, ils affectent défavorablement la stabilité thermique initiale des compositions à base de polymères du chlorure de vinyle.

Des échantillons d'eau minérale stockée dans des flacons fabriqués par extrusion — soufflage, dans des conditions usuelles, de compositions conformes à celles des exemples 2 et 8, de référence, et 3, 6 et 9 selon l'invention, ont été soumis à l'appréciation d'un groupe de dégustateurs d'eau. L'eau contenue dans les flacons fabriqués au départ des compositions 2 et 8 avait un goût inacceptable. Celle contenue dans les falcons fabriqués au départ des compositions 3, 6 et 9 a été jugée bonne.

TABLEAU I

| Nº de l'exemple | Antioxydant phénolique, pcr* | DHP pcr* | Evaluation des compositions | | | | | |
|---|---|---|---|---|---|---|---|---|
| | | | Stabilité thermique à court terme Indice de jaune IJ à 195°C après: | | | | | Stabilité thermique à long terme, |
| | | | 2 min. | 3 min. | 4 min. | 5 min. | 7 min. | min. |
| 1 | néant | néant | +7,4 | +17 | +30,4 | +70,8 | +102 | 26 |
| 2 | néant | 0,1 | −17,3 | −14,3 | −7,5 | +7,8 | +81,6 | 28 |
| 3 | 0,1 | 0,1 | −22,4 | −20,5 | −16 | −11,3 | +32,3 | 30 |
| 4 | 0,05 | 0,1 | −21,7 | −19,9 | −15,8 | −3,6 | +80,8 | — |
| 5 | 0,2 | 0,1 | −21,1 | −18,6 | −13,5 | −0,5 | +77,9 | 29 |
| 6 | 0,1 | 0,1 | −26,1 | −23,7 | −18,5 | −10 | +57,8 | 27 |
| 7 | 0,1 | néant | +12,6 | +23,1 | +39,1 | +65,4 | +112 | 28 |

* pcr: pourcent en poids par rapport au polymère du chlorure de vinyle

TABLEAU II

| Nº de l'exemple | Antioxydant sulfuré pcr* | DHP pcr* | Evaluation des compositions — Stabilité thermique à court terme Indice de jaune IJ à 195°C après: 2 min. | 3 min. | 4 min. | 5 min. | 7 min. | Stabilité thermique à long terme, min. |
|---|---|---|---|---|---|---|---|---|
| 8 | néant | 0,1 | −17,3 | −14,3 | −7,5 | +7,8 | +81,6 | 28 |
| 9 | 0,1 | 0,1 | −25,3 | −22 | −17 | −8,6 | +43,4 | 26 |
| 10 | 0,1 | néant | +10,5 | +19,5 | +32,3 | +71,2 | +113 | 28 |

* pcr: pourcent en poids par rapport au polymère du chlorure de vinyle

**Revendications**

1. Compositions stablisées à la chaleur à base de polymères du chlorure de vinyle comprenant un stabilisant thermique primaire usuel et au moins une 2,6-dialkyl, 3,5-dicarbalkoxy, 1,4-dihydropyridine, caractérisées en ce qu'elles contiennent au moins un antioxydant phénolique ou sulfuré.

2. Compositions selon la revendication 1, caractérisées en ce que l'antioxydant est un antioxydant phénolique et est choisi parmi les monophénols monocycliques, les bisphénols et les trisphénols substitués par des groupements tertiobutyle.

3. Compositions selon la revendication 2, caractérisées en ce que le monophénol monocyclique est choisi parmi le 2,6-di-tertiobutyl-4-méthylphénol et le 3-(3',5'-di-tertiobutyl-4-hydroxy-phényl) propionate de n-octadécyle.

4. Compositions selon la revendication 1, caractérisées en ce que l'antioxydant est un antioxydant sulfuré et est choisi parmi les thioesters.

5. Compositions selon la revendication 4, caractérisées en ce que le thioester est un thiodipropionate dérivé d'un acide organique carboxylique comprenant de 10 à 20 atomes des carbone dans sa molécule.

6. Compositions selon la revendication 5, caractérisées en ce que le thiodipropionate est le thiodipropionate de dilauryle.

7. Compositions selon l'une quelconque des revendications 1 à 6, caractérisées en ce qu'elles contiennent de 0,1 à 0,2 partie d'antioxydant pour 100 parties en poids de polymère du chlorure de vinyle.

8. Compositions selon l'une quelconque des revendications 1 à 7, caractérisées en ce que la 2,6-dialkyl, 3,5-dicarbalkoxy, 1,4-dihydropyridine est choisie parmi les 2,6-diméthyl, 3,5-dicarbalkoxy, 1,4-dihydropyridines dont le groupement alkyle des groupements substituants carbalkoxy comprend de 8 à 18 atomes de carbone et est utilisée en une quantité allant de 0,05 à 0,5 partie pour 100 parties en poids de polymère du chlorure de vinyle.

9. Compositions selon la revendication 8, caractérisées en ce que la 2,6-diméthyl, 3,5-dicarbalkoxy, 1,4-dihydropyridine est la 2,6-diméthyl, 3,5-dicarbododécyloxy, 1,4-dihydropyridine.

10. Compositions selon l'une quelconque des revendications 1 à 9, caractérisées en ce que le stabilisant thermique primaire est choisi parmi les systèmes à base de sels de calcium et de zinc d'acides aliphatiques monocarboxyliques ayant de 6 à 30 atomes de carbone et est utilisé en une quantité allant de 0,2 à 1 partie pour 100 parties en poids de polymère du chlorure de vinyle.

**Claims**

1. Heat-stabilised compositions based on vinyl chloride polymers, comprising a customary primary heat stabiliser and at least one 2,6-dialkyl-3,5-dicarbalkoxy-1,4-dihydropyridine, characterised in that they contain at least one phenolic or sulphur-containing antioxidant.

2. Compositions according to Claim 1, characterised in that the antioxidant is a phenolic antioxidant and is chosen from amongst monocyclic monophenols, bis-phenols and tris-phenols substituted by tert.-butyl groups.

3. Compositions according to Claim 2, characterised in that the monocyclic monophenol is chosen from 2,6-di-tert.-butyl-4-methylphenol and n-octadecyl 3-(3',5'-di-tert.-butyl-4-hydroxyphenyl)-propionate.

4. Compositions according to Claim 1, characterised in that the antioxidant is a sulphur-containing antioxidant and is chosen from amongst thioesters.

5. Compositions according to Claim 4, characterised in that the thioester is a thiodipropionate derived from an organic carboxylic acid containing from 10 to 20 carbon atoms in its molecule.

6. Compositions according to Claim 5, characterised in that the thiodipropionate is dilauryl thiodipropionate.

7. Compositions according to any one of Claims 1 to 6, characterised in that they contain from 0.1 to 0.2 part of antioxidant per 100 parts by weight of vinyl chloride polymer.

8. Compositions according to any one of Claims 1 to 7, characterised in that the 2,6-dialkyl-3,5-dicarbalkoxy-1,4-dihydropyridine is chosen from amongst 2,6-dimethyl-3,5-dicarbalkoxy-1,4-dihydropyridines in which the alkyl group of the substituent carbalkoxy groups contain from 8 to 18 carbon atoms, and is used in an amount ranging from 0.05 to 0.5 parts per 100 parts by weight of vinyl chloride polymer.

9. Compositions according to Claim 8, characterised in that the 2,6-dimethyl-3,5-dicarbalkoxy-1,4-dihydropyridine is 2,6-dimethyl-3,5-dicarbododecyloxy-1,4-dihydropyridine.

10. Compositions according to any one of Claims 1 to 9, characterised in that the primary heat stabiliser is chosen from amongst systems based on calcium salts and zinc salts of aliphatic monocarboxylic acids having from 6 to 30 carbon atoms, and is used in an amount ranging from 0.2 to 1 part per 100 parts by weight of vinyl chloride polymer.

## Patentansprüche

1. Gegen Wärme stabilisierte Zusammensetzungen auf der Basis von Polymeren des Vinylchlorids, enthaltend einen üblichen primären Wärmestablisator und mindestens ein 2,6-Dialkyl-3,5-dicarbalkoxy-1,4-dihydro-pyridin, dadurch gekennzeichnet, dass sie mindestens ein phenolisches oder schwefelhaltiges Antioxidationsmittel enthalten.

2. Zusammensetzungen nach Anspruch 1, dadurch gekennzeichnet, dass das Antioxidationsmittel ein phenolisches Antioxidationsmittel ist und unter den monocyclischen Monophenolen, den Bisphenolen und den Trisphenolen ausgewählt ist, welche durch tertiäre Butylgruppen substituiert sind.

3. Zusammensetzung nach Anspruch 2, dadurch gekennzeichnet, dass das monocyclische Monophenol ausgewählt ist unter 2,6-Di-tert.Butyl-4-methylphenol und n-Octadecyl-3-(3',5'-di-tert. butyl-4-hydroxyphenyl)-propionat.

4. Zusammensetzungen nach Anspruch 1, dadurch gekennzeichnet, dass das Antioxidationsmittel ein schwefelhaltiges Antioxidationsmittel ist und unter den Thioestern ausgewählt ist.

5. Zusammensetzungen nach Anspruch 4, dadurch gekennzeichnet, dass der Thioester ein von einer organischen Carbonsäure mit 10 bis 20 Kohlenstoffatomen in ihrem Molekül abgeleitetes Thiodipropionat ist.

6. Zusammensetzungen nach Anspruch 5, dadurch gekennzeichnet, dass das Thiodipropionat das Dilaurylthiodipropionat ist.

7. Zusammensetzungen nach einem der Ansprüche 1 bis 6, dadurch gekennzeichnet, dass sie 0,1 bis 0,2 Teile Antioxidationsmittel je 100 gew.-Teile Polyvinylchlorid enthalten.

8. Zusammensetzungen nach einem der Ansprüche 1 bis 7, dadurch gekennzeichnet, dass das 2,6-Dialkyl-3,5-dicarbalkoxy-1,4-dihydropyridin ausgewählt ist unter den 2,6-Dimethyl-3,5-dicarbalkoxy-1,4-dihydropyridinen, deren Alkylgruppen in den Carbalkoxysubstituenten 8 bis 18 Kohlenstoffatome aufweisen und das in einer Menge von 0,05 bis 0,5 Teilen je 100 Gew.-Teile Polyvinylchlorid verwendet wird.

9. Zusammensetzungen nach Anspruch 8, dadurch gekennzeichnet, dass das 2,6-Dimethyl-3,5-dicarbalkoxy-1,4-dihydropyridin das 2,6-Dimethyl-3,5-dicarbododecyloxy-1,4-dihydropyridin ist.

10. Zusammensetzungen nach einem der Ansprüche 1 bis 9, dadurch gekennzeichnet, dass der primäre Wärmestabilisator ausgewählt ist unter den Systemen auf der Basis von Salzen des Kalziums und des Zinks von aliphatischen Monocarbonsäuren mit 6 bis 30 Kohlenstoffatomen und in einer Menge von 0,2 bis 1 Teil je 100 Gew.-Teile Polyvinylchlorid verwendet wird.